# EUROPÄISCHE PATENTSCHRIFT

(11) **EP 4 330 572 B1**
(45) Veröffentlichungstag und Bekanntmachung des Hinweises auf die Patenterteilung: **25.12.2024**
(21) Anmeldenummer: 22702988.1
(22) Anmeldetag: 02.02.2022
(51) Int. Cl.: B60K 11/02, B60K 11/00, F16K 11/085, F16K 11/16, F16K 37/00, F01P 7/14, F01P 7/16, B60K 1/00

(54) **MEHRWEGEVENTIL FÜR EIN KRAFTFAHRZEUG UND VERFAHREN ZUM BETRIEB EINES MEHRWEGEVENTILS FÜR EIN KRAFTFAHRZEUG**
MULTI-WAY VALVE FOR A MOTOR VEHICLE AND METHOD FOR OPERATING A MULTI-WAY VALVE FOR A MOTOR VEHICLE
SOUPAPE À PLUSIEURS VOIES POUR UN VÉHICULE À MOTEUR ET PROCÉDÉ DE FONCTIONNEMENT D'UNE SOUPAPE À PLUSIEURS VOIES POUR UN VÉHICULE À MOTEUR

(30) Priorität: 30.04.2021 DE 102021111158
(43) Veröffentlichungstag der Anmeldung: 06.03.2024
(73) Patentinhaber: HELLA GmbH & Co. KGaA, 59552 Lippstadt (DE)
(72) Erfinder: TIEMEYER, Sebastian, 44143 Dortmund (DE); BEWERMEYER, Frank, 33142 Büren (DE); NIESS, Dominik, 59555 Lippstadt (DE)
(74) Vertreter: Behr-Wenning, Gregor
(86) Internationale Anmeldenummer: PCT/EP2022/052435
(87) Internationale Veröffentlichungsnummer: WO 2022/228739

(56) Entgegenhaltungen:
- DE-B4- 112014 000 253
- DE-T5- 112013 002 082
- US-A- 4 655 252

## Beschreibung

Die vorliegende Erfindung bezieht sich auf ein Mehrwegeventil für ein Kraftfahrzeug nach dem Oberbegriff des Anspruchs 1 und ein Verfahren zum Betrieb eines Mehrwegeventils für ein Kraftfahrzeug.

Derartige Mehrwegeventile für Kraftfahrzeuge und Verfahren zu deren Betrieb sind aus dem Stand der Technik in zahlreichen Ausführungsvarianten bereits bekannt.

Die Druckschrift DE 11 2014 000 253 B4 offenbart einen Kühlmittelregler**,** gemäß der Präambel von Anspruch 1, umfassend ein Gehäuse, in dem eine untere und eine obere Kammer entlang einer Drehachse übereinander angeordnet und mittels einer Trennwand voneinander im Wesentlichen dicht getrennt sind, einen in der unteren Kammer um die Drehachse drehbar angeordneten unteren Ventilkörper, einen in der oberen Kammer um die Drehachse drehbar angeordneten oberen Ventilkörper und eine Antriebswelle zum automatischen Antrieb des unteren und des oberen Ventilkörpers, wobei die Antriebswelle mit einem der beiden Ventilkörper drehmomentübertragend verbunden ist und dieser Ventilkörper mit dem anderen der beiden Ventilkörper drehmomentübertragend verbunden ist.

Hier setzt die vorliegende Erfindung an.

Der vorliegenden Erfindung liegt die Aufgabe zugrunde, ein Mehrwegeventil für ein Kraftfahrzeug und ein Verfahren zum Betrieb eines Mehrwegeventils für ein Kraftfahrzeug zu verbessern.

Diese Aufgabe wird durch ein Mehrwegeventil für ein Kraftfahrzeug mit den Merkmalen des Anspruchs 1 gelöst, das dadurch gekennzeichnet ist, dass das Mehrwegeventil eine Kontrolleinrichtung zur Kontrolle der korrekten Ausrichtung in Umfangsrichtung des unteren Ventilkörpers relativ zu dem oberen Ventilkörper aufweist und in Abhängigkeit einer relativen Fehlausrichtung der beiden Ventilkörper in Umfangsrichtung eine Reaktion auf diese detektierte Fehlausrichtung automatisch auslösbar ist. Ferner wird diese Aufgabe durch ein Verfahren zum Betrieb eines Mehrwegeventils für ein Kraftfahrzeug mit den Merkmalen des Anspruchs 10 gelöst. Die Unteransprüche betreffen vorteilhafte Weiterbildungen der Erfindung.

Ein wesentlicher Vorteil der Erfindung liegt insbesondere darin, dass ein Mehrwegeventil für ein Kraftfahrzeug und ein Verfahren zum Betrieb eines Mehrwegeventils für ein Kraftfahrzeug verbessert sind. Aufgrund der erfindungsgemäßen Ausbildung des Mehrwegeventils für ein Kraftfahrzeug und des Verfahrens zum Betrieb eines Mehrwegeventils für ein Kraftfahrzeug sind beispielsweise mechanische Beschädigungen des erfindungsgemäßen Mehrwegeventils verlässlich feststellbar, insbesondere an dem Ventilkörper, der lediglich indirekt mittels des mittels der Antriebswelle direkt angetriebenen Ventilkörpers angetrieben wird. Bei der vorgenannten mechanischen Beschädigung kann es sich beispielsweise um ein Versagen der form- und/oder kraftschlüssigen Verbindung des lediglich indirekt angetriebenen Ventilkörpers mit dem mittels der Antriebswelle direkt angetriebenen Ventilkörper handeln.

Grundsätzlich ist das erfindungsgemäße Mehrwegeventil für ein Kraftfahrzeug nach Art, Funktionsweise, Material und Dimensionierung in weiten geeigneten Grenzen frei wählbar. Beispielsweise ist das erfindungsgemäße Mehrwegeventil für ein Kraftfahrzeug bei einem Kühlsystem für ein Elektrofahrzeug vorteilhaft einsetzbar.

Eine vorteilhafte Weiterbildung des erfindungsgemäßen Mehrwegeventils sieht vor, dass die Kontrolleinrichtung eine Steuerung und einen mit der Steuerung signalübertragend verbundenen Sensor zur automatischen Ermittlung eines tatsächlichen Drehwinkels bei der Drehung der beiden Ventilkörper von einer ersten Endlage in eine zweite Endlage aufweist, wobei der tatsächliche Drehwinkel in der Steuerung mit einem vorher festgelegten nominellen Drehwinkel bei der Drehung der beiden Ventilkörper um die Drehachse verglichen wird, und wobei der tatsächliche Drehwinkel, bei einer korrekten relativen Ausrichtung in Umfangsrichtung der beiden Ventilkörper, dem nominellen Drehwinkel entspricht. Hierdurch ist das Vorliegen einer mechanischen Beschädigung bei dem erfindungsgemäßen Mehrwegeventil auf besonders einfache und zuverlässige Art und Weise realisierbar.

Eine besonders vorteilhafte Weiterbildung des erfindungsgemäßen Mehrwegeventils sieht vor, dass die Kontrolleinrichtung eine an der Trennwand und dem unteren Ventilkörper angeordnete untere Kulissenstein-Kulissen-Paarung und eine an der Trennwand und dem oberen Ventilkörper angeordnete obere Kulissenstein-Kulissen-Paarung umfasst. Auf diese Weise ist die Kontrolleinrichtung des erfindungsgemäßen Mehrwegeventils auf konstruktiv und fertigungstechnisch besonders einfache und robuste Art umsetzbar.

Eine vorteilhafte Weiterbildung der vorgenannten Ausführungsform des erfindungsgemäßen Mehrwegeventils sieht vor, dass die Kulissen der beiden Kulissenstein-Kulissen-Paarungen in Umfangsrichtung derart zueinander versetzt angeordnet sind, dass die erste Endlage mittels der einen Kulissenstein-Kulissen-Paarung und die zweite Endlage mittels der anderen Kulissenstein-Kulissen-Paarung mechanisch festgelegt ist. Hierdurch ist die mechanische Ausbildung der Kontrolleinrichtung des erfindungsgemäßen Mehrwegeventils auf sehr einfache Art und Weise ermöglicht.

Eine vorteilhafte Weiterbildung der letztgenannten Ausführungsform des erfindungsgemäßen Mehrwegeventils sieht vor, dass der nominelle Drehwinkel 180° beträgt, wobei jede der Kulissen der beiden Kulissenstein-Kulissen-Paarungen einen Drehwinkelbereich von größer 180° ermöglicht. Der vorgenannte Drehwinkel ist für die Anwendung des erfindungsgemäßen Mehrwegeventils besonders geeignet.

Eine andere vorteilhafte Weiterbildung des erfindungsgemäßen Mehrwegeventils sieht vor, dass das Gehäuse einen Gehäusemantel aufweist, wobei ein unteres und ein oberes offenes Ende des Gehäusemantels mittels eines unteren und eines oberen Gehäusedeckels im Wesentlichen dicht abdeckbar sind, wobei in einem der Gehäusedeckel eine Antriebswellenöffnung zur Hindurchführung der Antriebswelle angeordnet ist. Auf diese Weise ist das Gehäuse auf konstruktiv und fertigungstechnisch einfache Art umsetzbar.

Eine weitere vorteilhafte Weiterbildung des erfindungsgemäßen Mehrwegeventils sieht vor, dass die Antriebwelle als ein integraler Bestandteil des unteren oder des oberen Ventilkörpers ausgebildet ist. Hierdurch ist die Konstruktion und die Fertigung des erfindungsgemäßen Mehrwegeventils weiter vereinfacht.

Eine andere vorteilhafte Weiterbildung des erfindungsgemäßen Mehrwegeventils sieht vor, dass der mit der Antriebswelle drehmomentübertragend verbundene Ventilkörper mit dem anderen Ventilkörper zwecks Drehmomentübertragung mittels einer Kupplung mechanisch verbunden ist, wobei die Kupplung ein dem unteren Ventilkörper zugeordnetes unteres Kupplungsteil und ein dem oberen Ventilkörper zugeordnetes oberes Kupplungsteil aufweist, und wobei das untere oder das obere Kupplungsteil durch eine Kupplungsöffnung in der Trennwand hindurchragt, bevorzugt, dass das untere Kupplungsteil als ein integraler Bestandteil des unteren Ventilkörpers und/oder das obere Kupplungsteil als ein integraler Bestandteil des oberen Ventilkörpers ausgebildet sind/ist. Auf diese Weise ist die drehmomentübertragende Verbindung zwischen den beiden Ventilkörpern zur gemeinsamen Drehung um die Drehachse sehr einfach realisierbar. Dies gilt insbesondere für die bevorzugte Ausführungsform dieser Weiterbildung.

Eine weitere vorteilhafte Weiterbildung des erfindungsgemäßen Mehrwegeventils sieht vor, dass zwischen dem Gehäuse und dem unteren Ventilkörper und/oder dem oberen Ventilkörper und/oder zwischen dem Gehäusemantel und dem unteren und/oder dem oberen Gehäusedeckel und/oder zwischen der Antriebswelle und dem unteren oder dem oberen Gehäusedeckel und/oder zwischen der Trennwand und dem unteren oder dem oberen Kupplungsteil jeweils eine separate Dichtung angeordnet ist. Hierdurch ist die Abdichtung des erfindungsgemäßen Mehrwegeventils zu der freien Umgebung einerseits und die Abdichtung der sich zueinander bewegenden einzelnen Komponenten des erfindungsgemäßen Mehrwegeventils andererseits wesentlich vereinfacht. Ferner ist es möglich, die jeweilige Dichtung besser auf die Erfordernisse des jeweiligen Einzelfalls anzupassen. Dies gilt beispielsweise für die Materialauswahl. Grundsätzlich ist es aber möglich, dass die vorgenannten Dichtungen zumindest teilweise als ein integraler Bestandteil einer der vorgenannten Komponenten des erfindungsgemäßen Mehrwegeventils ausgebildet sind.

Anhand der beigefügten, grob schematischen Zeichnung wird die Erfindung nachfolgend näher erläutert. Dabei zeigt:
- Fig. 1: ein Ausführungsbeispiel des erfindungsgemäßen Mehrwegeventils für ein Kraftfahrzeug in einer geschnittenen Seitenansicht,
- Fig. 2a: das Ausführungsbeispiel in einer geschnittenen Unteransicht der Trennwand (Bildebene oben) und in einer geschnittenen Draufsicht der Trennwand (Bildebene unten), mit den beiden Ventilkörpern in einer ersten Endlage,
- Fig. 2b: das Ausführungsbeispiel in einer geschnittenen Unteransicht der Trennwand (Bildebene oben) und in einer geschnittenen Draufsicht der Trennwand (Bildebene unten), mit den beiden Ventilkörpern in einer zweiten Endlage,
- Fig. 3a: das Ausführungsbeispiel in einer geschnittenen Explosionsdarstellung,
- Fig. 3b: das Ausführungsbeispiel in einer zu der Fig. 3a korrespondierenden Explosionsdarstellung,
- Fig. 4a: das Ausführungsbeispiel in einer ersten perspektivischen Explosionsdarstellung und
- Fig. 4b: das Ausführungsbeispiel in einer zweiten perspektivischen Explosionsdarstellung.

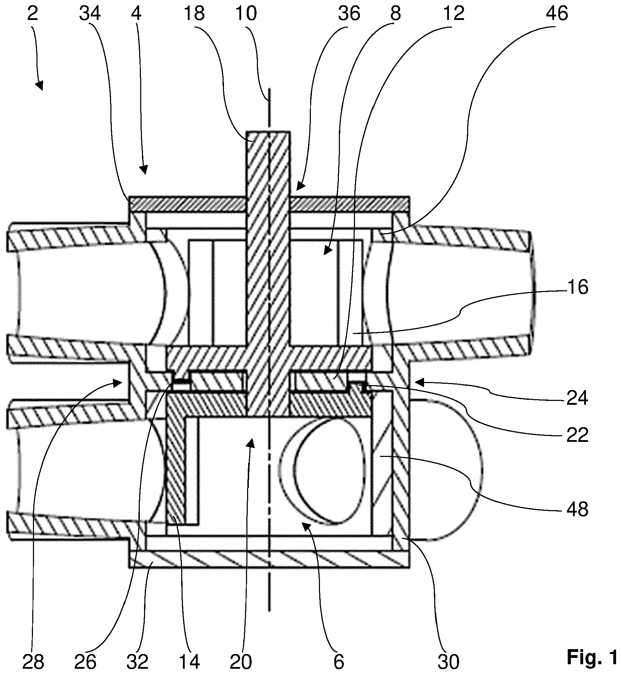

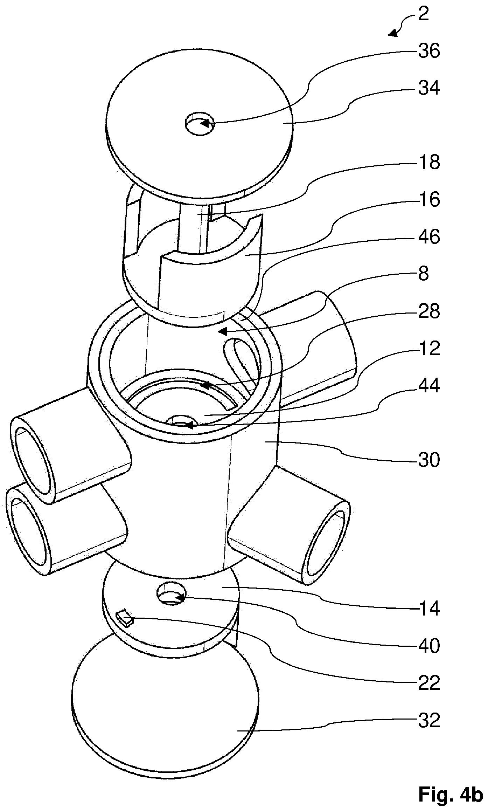

In den Fig. 1 bis 4b ist ein Ausführungsbeispiel des erfindungsgemäßen Mehrwegeventils für ein Kraftfahrzeug rein exemplarisch dargestellt.

Das Mehrwegeventil 2 für ein nicht näher dargestelltes Kühlsystem eines Elektrofahrzeugs umfasst ein Gehäuse 4, in dem eine untere und eine obere Kammer 6, 8 entlang einer Drehachse 10 übereinander angeordnet und mittels einer Trennwand 12 voneinander im Wesentlichen dicht getrennt sind, einen in der unteren Kammer 6 um die Drehachse 10 drehbar angeordneten unteren Ventilkörper 14, einen in der oberen Kammer 8 um die Drehachse 10 drehbar angeordneten oberen Ventilkörper 16 und eine Antriebswelle 18 zum automatischen Antrieb des unteren und des oberen Ventilkörpers 14, 16, wobei die Antriebswelle 18 mit dem oberen Ventilkörper 16 drehmomentübertragend verbunden ist und dieser Ventilkörper 16 mit dem unteren Ventilkörper 14 drehmomentübertragend verbunden ist. Die Antriebwelle 18 ist bei dem vorliegenden Ausführungsbeispiel als ein integraler Bestandteil des oberen Ventilkörpers 16 ausgebildet.

Erfindungsgemäß weist das Mehrwegeventil 2 eine Kontrolleinrichtung 20 zur Kontrolle der korrekten Ausrichtung in Umfangsrichtung des unteren Ventilkörpers 14 relativ zu dem oberen Ventilkörper 16 auf. In Abhängigkeit einer relativen Fehlausrichtung der beiden Ventilkörper 14, 16 in Umfangsrichtung ist eine Reaktion auf diese detektierte Fehlausrichtung automatisch auslösbar.

Die Kontrolleinrichtung 20 weist eine nicht dargestellte Steuerung und einen mit der Steuerung signalübertragend verbundenen, ebenfalls nicht dargestellten, Sensor zur automatischen Ermittlung eines tatsächlichen Drehwinkels bei der Drehung der beiden Ventilkörper 14, 16 von einer ersten Endlage in eine zweite Endlage auf, wobei der tatsächliche Drehwinkel in der Steuerung mit einem vorher festgelegten nominellen Drehwinkel bei der Drehung der beiden Ventilkörper 14, 16 um die Drehachse 10 verglichen wird, und wobei der tatsächliche Drehwinkel, bei einer korrekten relativen Ausrichtung in Umfangsrichtung der beiden Ventilkörper 14, 16, dem nominellen Drehwinkel entspricht.

Die Kontrolleinrichtung 20 umfasst ferner eine an der Trennwand 12 und dem unteren Ventilkörper 14 angeordnete untere Kulissenstein-Kulissen-Paarung 22, 24 und eine an der Trennwand 12 und dem oberen Ventilkörper 16 angeordnete obere Kulissenstein-Kulissen-Paarung 26, 28. Die untere Kulissenstein-Kulissen-Paarung 22, 24 umfasst den an dem unteren Ventilkörper 14 integral ausgebildeten Kulissenstein 22 und die als Nut in der Trennwand 12 ausgebildete Kulisse 24. Die obere Kulissenstein-Kulissen-Paarung 26, 28 umfasst den an dem oberen Ventilkörper 16 integral ausgebildeten Kulissenstein 26 und die als Nut in der Trennwand 12 ausgebildete Kulisse 28. Siehe hierzu insbesondere die Fig. 1.

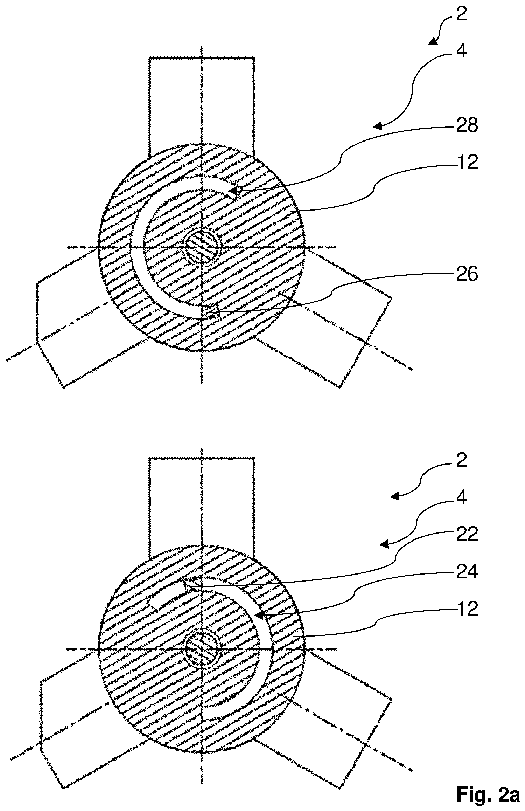

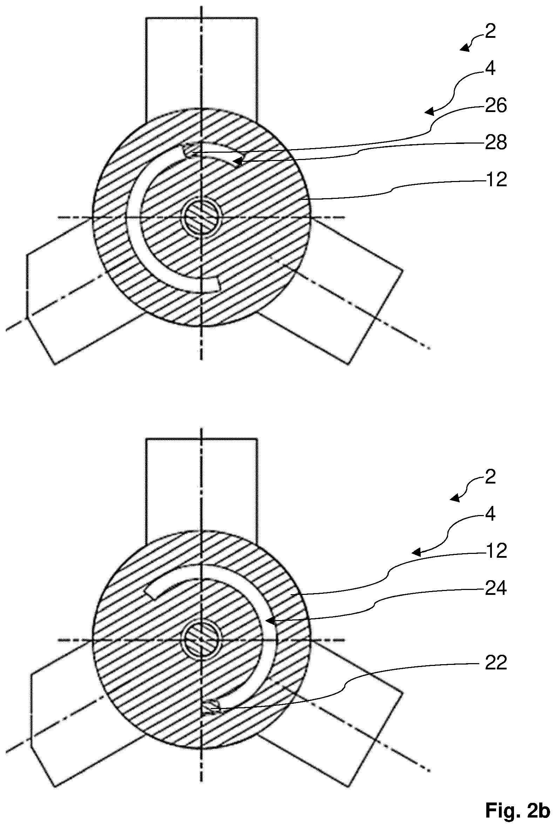

Die Kulissen 24, 28 der beiden Kulissenstein-Kulissen-Paarungen 22, 24; 26, 28 sind bei dem vorliegenden Ausführungsbeispiel in Umfangsrichtung derart zueinander versetzt angeordnet, dass die erste Endlage mittels der unteren Kulissenstein-Kulissen-Paarung 22, 24 und die zweite Endlage mittels der oberen Kulissenstein-Kulissen-Paarung 26, 28 mechanisch festgelegt ist. Siehe hierzu insbesondere die Fig. 2a und 2b. Die zweite Endlage ist hier mittels der in der Fig. 2a in der Bildebene oben dargestellten zweiten Kulissenstein-Kulissen-Paarung 26, 28 mechanisch festgelegt, während der Kulissenstein 22 in der Kulisse 24, wie in der Bildebene der Fig. 2a unten dargestellt, noch nicht an einem der beiden Enden der Kulisse 24 anliegt. Die erste Endlage ist hier mittels der in der Fig. 2b in der Bildebene unten dargestellten ersten Kulissenstein-Kulissen-Paarung 22, 24 mechanisch festgelegt, während der Kulissenstein 26 in der Kulisse 28, wie in der Bildebene der Fig. 2b oben dargestellt, noch nicht an einem der beiden Enden der Kulisse 28 anliegt.

Wie aus einer Zusammenschau der Fig. 2a und 2b hervorgeht, beträgt der nominelle Drehwinkel hier 180°, wobei jede der Kulissen 24, 28 der beiden Kulissenstein-Kulissen-Paarungen 22, 24; 26, 28 einen Drehwinkelbereich von größer 180° ermöglicht.

Ferner weist das Gehäuse 4 bei dem vorliegenden Ausführungsbeispiel einen Gehäusemantel 30 auf, wobei ein unteres und ein oberes offenes Ende des Gehäusemantels 30 mittels eines unteren und eines oberen Gehäusedeckels 32, 34 im Wesentlichen dicht abdeckbar sind, wobei in dem oberen Gehäusedeckel 34 eine Antriebswellenöffnung 36 zur Hindurchführung der Antriebswelle 18 angeordnet ist.

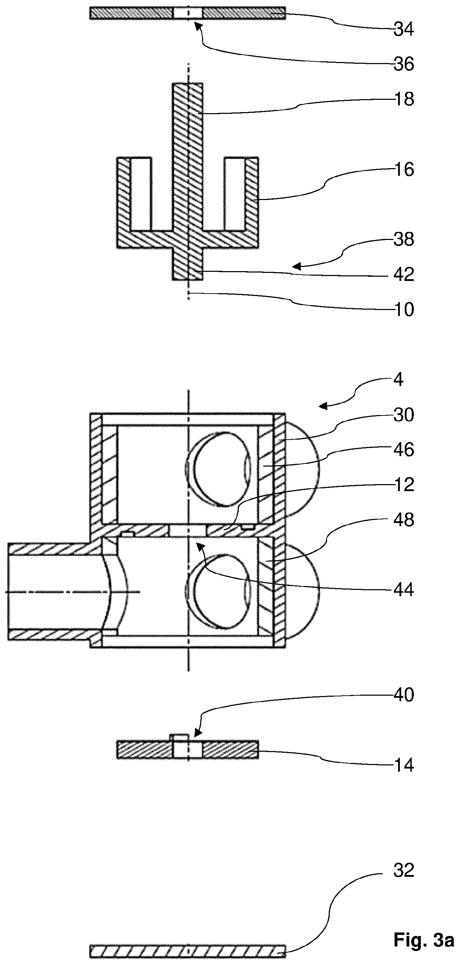

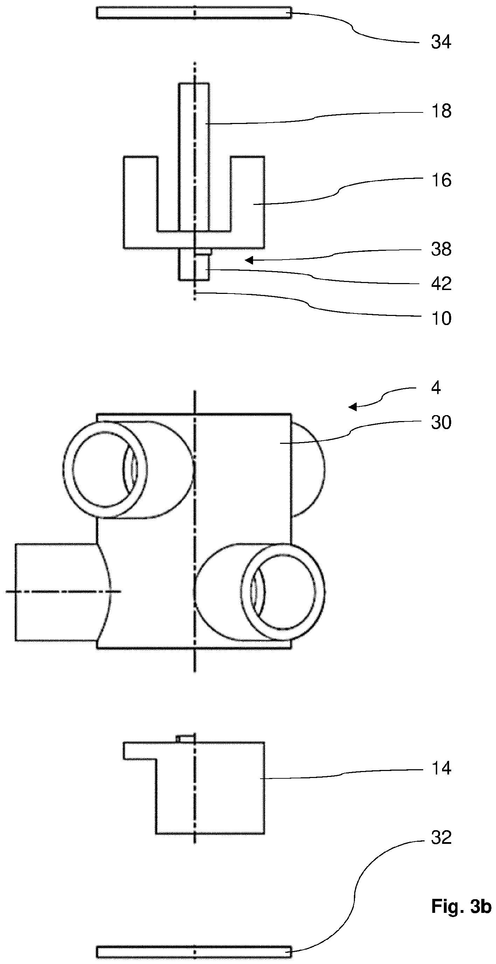

Der mit der Antriebswelle 18 drehmomentübertragend verbundene obere Ventilkörper 16 ist mit dem unteren Ventilkörper 14 zwecks Drehmomentübertragung mittels einer Kupplung 38 mechanisch verbunden, wobei die Kupplung 38 ein dem unteren Ventilkörper 14 zugeordnetes unteres Kupplungsteil 40 und ein dem oberen Ventilkörper 16 zugeordnetes oberes Kupplungsteil 42 aufweist, und wobei das obere Kupplungsteil 42 durch eine Kupplungsöffnung 44 in der Trennwand 12 hindurchragt. Das untere Kupplungsteil 40 ist als ein integraler Bestandteil des unteren Ventilkörpers 14, nämlich als eine Aufnahme, und das obere Kupplungsteil 42 ist als ein integraler Bestandteil des oberen Ventilkörpers 16, nämlich als ein Vorsprung, ausgebildet. Siehe hierzu insbesondere die Fig. 3a.

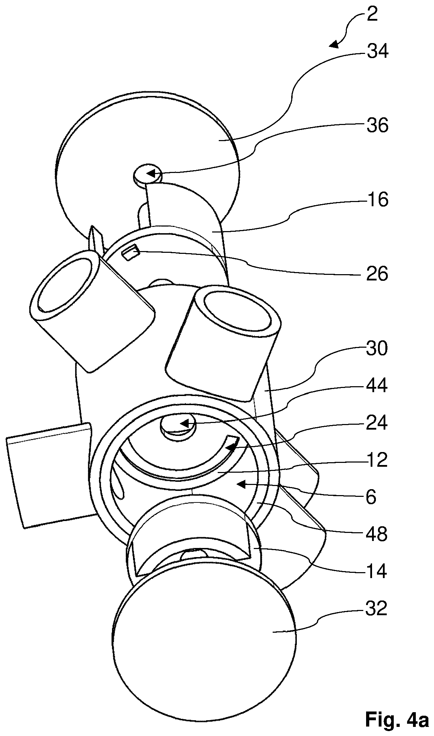

Zwischen dem Gehäuse 4 und dem unteren Ventilkörper 14 und dem oberen Ventilkörper 16 und zwischen dem Gehäusemantel 30 und dem unteren und dem oberen Gehäusedeckel 32, 34 und zwischen der Antriebswelle 18 und dem oberen Gehäusedeckel 34 und zwischen der Trennwand 18 und dem oberen Kupplungsteil 42 sind jeweils Dichtungen angeordnet. Die Dichtungen können dabei beispielsweise jeweils als ein integraler Bestandteil einer der vorgenannten Komponenten des Mehrwegeventils 2 ausgebildet sein. Rein exemplarisch sind in den Fig. 1, 3a, 4a und 4b die Dichtungen 46, 48 dargestellt.

Im Nachfolgenden wird die Funktionsweise des erfindungsgemäßen Mehrwegeventils und das erfindungsgemäße Verfahren gemäß dem vorliegenden Ausführungsbeispiel anhand der Fig. 1 bis 4b näher erläutert.

Zunächst befinden sich die beiden Ventilkörper 14, 16 des Mehrwegeventils 2 in der in der Fig. 2a dargestellten zweiten Endlage. Diese zweite Endlage ist, wie oben bereits erläutert, mittels der oberen Kulissenstein-Kulissen-Paarung 26, 28 mechanisch festgelegt. Siehe hierzu die obere Darstellung in der Fig. 2a. Zwar könnte sich der untere Ventilkörper 14 aufgrund der unteren Kulissenstein-Kulissen-Paarung 22, 24 theoretisch, bezogen auf die untere Darstellung in der Fig. 2a, noch weiter im Gegenuhrzeigersinn drehen. Jedoch wird dies durch die vorgenannte mechanische Festlegung mittels der oberen Kulissenstein-Kulissen-Paarung 26, 28 verhindert.

Werden die beiden Ventilkörper 14, 16 des Mehrwegeventils 2 nun mittels der Antriebswelle 18 von deren zweiten Endlage in deren erste Endlage überführt, so wandert der Kulissenstein 22, bezogen auf die untere Darstellung in der Fig. 2b, im Uhrzeigersinn soweit in der Kulisse 24, bis der Kulissenstein 22 an dem zu der ersten Endlage korrespondierenden Ende der Kulisse 24 anliegt. Wie aus der oberen Darstellung der Fig 2b ersichtlich, wäre es hier möglich, dass sich der obere Ventilkörper 16 aufgrund der oberen Kulissenstein-Kulissen-Paarung 26, 28 theoretisch, bezogen auf die obere Darstellung in der Fig. 2b, noch weiter im Uhrzeigersinn drehen könnte. Jedoch wird dies durch die vorgenannte mechanische Festlegung mittels der unteren Kulissenstein-Kulissen-Paarung 22, 24 verhindert.

Das Mehrwegeventil 2 ist mechanisch einwandfrei und der mittels des Sensors ermittelte tatsächliche Drehwinkel bei der Drehung der beiden Ventilkörper 14, 16 um die Drehachse 10 entspricht dem nominellen Drehwinkel, nämlich 180°. Mittels der Steuerung, in der der gemessene tatsächliche Drehwinkel und der nominelle Drehwinkel miteinander verglichen werden, wird somit kein Fehler in der relativen Ausrichtung in Umfangsrichtung der beiden Ventilkörper erkannt.

In einem Fehlerfall, also wenn der untere Ventilkörper 14 in Umfangsrichtung relativ zu dem oberen Ventilkörper 16 um die Drehachse 10 verdreht ist, wäre es aufgrund der vorgenannten mechanischen Ausbildung der Kontrolleinrichtung 20 möglich, die beiden Ventilkörper 14, 16 um mehr als 180° um die Drehachse 10 zu verdrehen. Entsprechend würde der Sensor einen tatsächlichen Drehwinkel von größer 180° detektieren und der Vergleich dieses tatsächlichen Drehwinkels mit dem in der Steuerung abgespeicherten nominellen Drehwinkel von 180° würde keine Übereinstimmung ergeben. In Abhängigkeit der auf die vorgenannte Weise erkannten relativen Fehlausrichtung der beiden Ventilkörper 14, 16 in Umfangsrichtung würde mittels der Steuerung eine Reaktion auf diese detektierte Fehlausrichtung automatisch ausgelöst. Beispielsweise könnte es sich bei der Reaktion auf die detektierte Fehlausrichtung um die Ausgabe einer von dem Benutzer, also dem Fahrzeugführer des Elektrofahrzeugs, optisch und/oder akustisch wahrnehmbaren Fehlermeldung handeln. Denkbar ist auch, dass aufgrund der detektierten Fehlausrichtung eine Funktion des Elektrofahrzeugs automatisch eingeschränkt oder verhindert wird.

Aufgrund der erfindungsgemäßen Ausbildung des Mehrwegeventils 2 für ein Kraftfahrzeug und des Verfahrens zum Betrieb des Mehrwegeventils 2 für ein Kraftfahrzeug sind beispielsweise mechanische Beschädigungen des erfindungsgemäßen Mehrwegeventils 2 verlässlich feststellbar, insbesondere an dem unteren Ventilkörper 14, der lediglich indirekt mittels des mittels der Antriebswelle 18 direkt angetriebenen oberen Ventilkörpers 16 angetrieben wird. Bei der vorgenannten mechanischen Beschädigung kann es sich beispielsweise um ein Versagen der form- und/oder kraftschlüssigen Verbindung des unteren Ventilkörpers 14 mit dem mittels der Antriebswelle 18 direkt angetriebenen oberen Ventilkörper 16 handeln.

Die Erfindung ist nicht auf das vorliegende Ausführungsbeispiel begrenzt. Beispielsweise ist die Erfindung auch bei anderen Kraftfahrzeugarten vorteilhaft einsetzbar.

Im Unterschied zu dem vorliegenden Ausführungsbeispiel des erfindungsgemäßen Mehrwegeventils kann es bei anderen Ausführungsbeispielen der Erfindung vorgesehen sein, dass zwischen dem Gehäuse und dem unteren Ventilkörper und/oder dem oberen Ventilkörper und/oder zwischen dem Gehäusemantel und dem unteren und/oder dem oberen Gehäusedeckel und/oder zwischen der Antriebswelle und dem unteren oder dem oberen Gehäusedeckel und/oder zwischen der Trennwand und dem unteren oder dem oberen Kupplungsteil jeweils eine separate Dichtung angeordnet ist. Hierdurch ist die Abdichtung des erfindungsgemäßen Mehrwegeventils zu der freien Umgebung einerseits und die Abdichtung der sich zueinander bewegenden einzelnen Komponenten des erfindungsgemäßen Mehrwegeventils andererseits auf alternative Art und Weise sichergestellt. Ferner ist es möglich, die jeweilige Dichtung besser auf die Erfordernisse des jeweiligen Einzelfalls anzupassen. Dies gilt beispielsweise für die Materialauswahl.

### Bezugszeichenliste

- 2: Mehrwegeventil
- 4: Gehäuse
- 6: Untere Kammer
- 8: Obere Kammer
- 10: Drehachse
- 12: Trennwand
- 14: Unterer Ventilkörper
- 16: Oberer Ventilkörper
- 18: Antriebswelle
- 20: Kontrolleinrichtung
- 22: Kulissenstein
- 24: Kulisse
- 26: Kulissenstein
- 28: Kulisse
- 30: Gehäusemantel des Gehäuses 4
- 32: Unterer Gehäusedeckel des Gehäuses 4
- 34: Oberer Gehäusedeckel des Gehäuses 4
- 36: Antriebswellenöffnung
- 38: Kupplung
- 40: Unteres Kupplungsteil der Kupplung 38
- 42: Oberes Kupplungsteil der Kupplung 38
- 44: Kupplungsöffnung
- 46: Dichtung
- 48: Dichtung

## Patentansprüche

1. Mehrwegeventil (2) für ein Kraftfahrzeug, umfassend ein Gehäuse (4), in dem eine untere und eine obere Kammer (6, 8) entlang einer Drehachse (10) übereinander angeordnet und mittels einer Trennwand (12) voneinander im Wesentlichen dicht getrennt sind, einen in der unteren Kammer (6) um die Drehachse (10) drehbar angeordneten unteren Ventilkörper (14), einen in der oberen Kammer (8) um die Drehachse (10) drehbar angeordneten oberen Ventilkörper (16) und eine Antriebswelle (18) zum automatischen Antrieb des unteren und des oberen Ventilkörpers (14, 16), wobei die Antriebswelle (18) mit einem der beiden Ventilkörper (16) drehmomentübertragend verbunden ist und dieser Ventilkörper (16) mit dem anderen der beiden Ventilkörper (14) drehmomentübertragend verbunden ist,
**dadurch gekennzeichnet,**
**dass** das Mehrwegeventil (2) eine Kontrolleinrichtung (20) zur Kontrolle der korrekten Ausrichtung in Umfangsrichtung des unteren Ventilkörpers (14) relativ zu dem oberen Ventilkörper (16) aufweist und in Abhängigkeit einer relativen Fehlausrichtung der beiden Ventilkörper (14, 16) in Umfangsrichtung eine Reaktion auf diese detektierte Fehlausrichtung automatisch auslösbar ist.

2. Mehrwegeventil (2) nach Anspruch 1,
**dadurch gekennzeichnet,**
**dass** die Kontrolleinrichtung (20) eine Steuerung und einen mit der Steuerung signalübertragend verbundenen Sensor zur automatischen Ermittlung eines tatsächlichen Drehwinkels bei der Drehung der beiden Ventilkörper (14, 16) von einer ersten Endlage in eine zweite Endlage aufweist, wobei der tatsächliche Drehwinkel in der Steuerung mit einem vorher festgelegten nominellen Drehwinkel bei der Drehung der beiden Ventilkörper (14, 16) um die Drehachse (10) verglichen wird, und wobei der tatsächliche Drehwinkel, bei einer korrekten relativen Ausrichtung in Umfangsrichtung der beiden Ventilkörper (14, 16), dem nominellen Drehwinkel entspricht.

3. Mehrwegeventil (2) nach Anspruch 1 oder 2,
**dadurch gekennzeichnet,**
**dass** die Kontrolleinrichtung (20) eine an der Trennwand (12) und dem unteren Ventilkörper (14) angeordnete untere Kulissenstein-Kulissen-Paarung (22, 24) und eine an der Trennwand (12) und dem oberen Ventilkörper (16) angeordnete obere Kulissenstein-Kulissen-Paarung (26, 28) umfasst.

4. Mehrwegeventil (2) nach Anspruch 3,
**dadurch gekennzeichnet,**
**dass** die Kulissen (24, 28) der beiden Kulissenstein-Kulissen-Paarungen (22, 24; 26, 28) in Umfangsrichtung derart zueinander versetzt angeordnet sind, dass die erste Endlage mittels der einen Kulissenstein-Kulissen-Paarung (22, 24) und die zweite Endlage mittels der anderen Kulissenstein-Kulissen-Paarung (26, 28) mechanisch festgelegt ist.

5. Mehrwegeventil (2) nach Anspruch 4,
**dadurch gekennzeichnet,**
**dass** der nominelle Drehwinkel 180° beträgt, wobei jede der Kulissen (24, 28) der beiden Kulissenstein-Kulissen-Paarungen (22, 24; 26, 28) einen Drehwinkelbereich von größer 180° ermöglicht.

6. Mehrwegeventil (2) nach einem der Ansprüche 1 bis 5,
**dadurch gekennzeichnet,**
**dass** das Gehäuse (4) einen Gehäusemantel (30) aufweist, wobei ein unteres und ein oberes offenes Ende des Gehäusemantels (30) mittels eines unteren und eines oberen Gehäusedeckels (32, 34) im Wesentlichen dicht abdeckbar sind, wobei in einem der Gehäusedeckel (34) eine Antriebswellenöffnung (36) zur Hindurchführung der Antriebswelle (18) angeordnet ist.

7. Mehrwegeventil (2) nach einem der Ansprüche 1 bis 6,
**dadurch gekennzeichnet,**
**dass** die Antriebwelle (18) als ein integraler Bestandteil des unteren oder des oberen Ventilkörpers (16) ausgebildet ist.

8. Mehrwegeventil (2) nach einem der Ansprüche 1 bis 7,
**dadurch gekennzeichnet,**
**dass** der mit der Antriebswelle (18) drehmomentübertragend verbundene Ventilkörper (16) mit dem anderen Ventilkörper (14) zwecks Drehmomentübertragung mittels einer Kupplung (38) mechanisch verbunden ist, wobei die Kupplung (38) ein dem unteren Ventilkörper (14) zugeordnetes unteres Kupplungsteil (40) und ein dem oberen Ventilkörper (16) zugeordnetes oberes Kupplungsteil (42) aufweist, und wobei das untere oder das obere Kupplungsteil (42) durch eine Kupplungsöffnung (44) in der Trennwand (12) hindurchragt, bevorzugt, dass das untere Kupplungsteil (40) als ein integraler Bestandteil des unteren Ventilkörpers (14) und/oder das obere Kupplungsteil (42) als ein integraler Bestandteil des oberen Ventilkörpers (16) ausgebildet sind/ist.

9. Mehrwegeventil (2) nach einem der Ansprüche 1 bis 8,
**dadurch gekennzeichnet,**
**dass** zwischen dem Gehäuse und dem unteren Ventilkörper und/oder dem oberen Ventilkörper und/oder zwischen dem Gehäusemantel und dem unteren und/oder dem oberen Gehäusedeckel und/oder zwischen der Antriebswelle und dem unteren oder dem oberen Gehäusedeckel und/oder zwischen der Trennwand und dem unteren oder dem oberen Kupplungsteil jeweils eine separate Dichtung angeordnet ist.

10. Verfahren zum Betrieb eines Mehrwegeventils (2) nach einem der Ansprüche 1 bis 9, wonach in Abhängigkeit einer relativen Fehlausrichtung der beiden Ventilkörper (14, 16) in Umfangsrichtung eine Reaktion auf diese detektierte Fehlausrichtung automatisch ausgelöst wird.

## Claims

1. Multi-way valve (2) for a motor vehicle, comprising a housing (4) in which a lower and an upper chamber (6, 8) are arranged above each other along a rotary axis (10) and are separated from each other by a partition wall (12) so as to be essentially leaktight, a lower valve body (14) in the lower chamber (6) arranged so as to be rotatable around the rotary axis (10), an upper valve body (16) in the upper chamber (8) arranged so as to be rotatable around the rotary axis (10) and a drive shaft (18) for automatically driving the lower and the upper valve body (14, 16), wherein the drive shaft (18) is connected to one of the two valve bodies (16) in a torque-transmitting manner and this valve body (16) is connected to the other of the two valve bodies (14) in a torque-transmitting manner,
**characterized in that**
that the multi-way valve (2) features a control device (20) for controlling the correct alignment in the circumferential direction of the lower valve body (14) relative to the upper valve body (16) and, depending on a relative misalignment of the two valve bodies (14, 16) in the circumferential direction, a reaction to such detected misalignment can be triggered automatically.

2. Multi-way valve (2) in accordance with claim 1,
**characterized in that**
the control device (20) features a control unit and a sensor connected to the control unit in a signal-transmitting manner for automatically detecting an actual rotation angle during the rotation of the two valve bodies (14, 16) from a first final position to a second final position, wherein the actual rotation angle is compared in the control unit with a previously specified nominal rotation angle during rotation of the two valve bodies (14, 16) around the rotary axis (10) and wherein the actual rotation angle corresponds to the nominal rotation angle with a correct relative alignment in the circumferential direction of the two valve bodies (14, 16).

3. Multi-way valve (2) in accordance with claim 1 or 2,
**characterized in that**
the control device (20) comprises a lower sliding block-slider pairing (22, 24) arranged on the partition wall (12) and the lower valve body (14) and an upper sliding block-slider pairing (26, 28) arranged on the partition wall (12) and the upper valve body (16).

4. Multi-way valve (2) in accordance with claim 3,
**characterized in that**
the sliders (24, 28) of the two sliding block-slider pairings (22, 24; 26, 28) are arranged in the circumferential direction offset to each other in such a way that the first final position is mechanically fixed by means of the one sliding block-slider pairing (22, 24) and the second final position is mechanically fixed by means of the other sliding block-slider pairing (26, 28).

5. Multi-way valve (2) in accordance with claim 4,
**characterized in that**
that the nominal rotation angle is 180°, wherein each of the sliders (24, 28) of the two sliding block-slider pairings (22, 24; 26, 28) enable a rotation angle range of greater than 180°.

6. Multi-way valve (2) in accordance with one of claims 1 through 5,
**characterized in that**
the housing (4) features a housing shell (30), wherein a lower and an upper open end of the housing shell (30) can be covered to be essentially leaktight by means of an upper and a lower housing cover (32, 34), wherein a drive shaft aperture (36) is arranged in one of the housing covers (34) as a feedthrough for the drive shaft (18).

7. Multi-way valve (2) in accordance with one of claims 1 through 6,
**characterized in that**
the drive shaft (18) is formed as an integral part of the lower or the upper valve body (16).

8. Multi-way valve (2) in accordance with one of claims 1 through 7,
**characterized in that**
the valve body (16) connected to the drive shaft (18) in a torque-transmitting manner is mechanically connected to the other valve body (14) for the purpose of torque transmission by means of a coupling (38), wherein the coupling (38) features a lower coupling part (40) allocated to the lower valve body (14) and an upper coupling part (42) allocated to the upper valve body (16), and wherein the lower or the upper coupling part (42) extends through a coupling aperture (44) in the partition wall (12), preferentially **in that** the lower coupling part (40) is designed as an integral part of the lower valve body (14) and/or the upper coupling part (42) is designed as an integral part of the upper valve body (16).

9. Multi-way valve (2) in accordance with one of claims 1 through 8,
**characterized in that**
a separate seal is arranged in each case between the housing and the lower valve body and/or the upper valve body and/or between the housing shell and the lower and/or the upper housing cover and/or between the drive shaft and the lower or the upper housing cover and/or between the partition wall and the lower or the upper coupling part.

10. Method for operating a multi-way valve for a motor vehicle (2) in accordance with one of claims 1 through 9, according to which depending on a relative misalignment of the two valve bodies (14, 16) in the circumferential direction a reaction to such detected misalignment can be triggered automatically.

## Revendications

1. Soupape à plusieurs voies (2) pour un véhicule à moteur comprenant un boîtier (4) dans lequel une chambre inférieure et une chambre supérieure (6, 8) sont disposées l'une au-dessus de l'autre le long d'un axe de rotation (10) et séparées l'une de l'autre pour l'essentiel de manière étanche au moyen d'une paroi de séparation (12), un corps de soupape inférieur (14) disposé dans la chambre inférieure (6) de manière à pouvoir tourner autour de l'axe de rotation (10), un corps de soupape supérieur (16) disposé dans la chambre supérieure (8) de manière à pouvoir tourner autour de l'axe de rotation (10) et un arbre d'entraînement (18) pour l'entraînement automatique du corps de soupape inférieur et du corps de soupape supérieur (14, 16), l'arbre d'entraînement (18) étant relié à l'un des deux corps de soupape (16) de manière à transmettre le couple et ce corps de soupape (16) étant relié à l'autre corps de soupape (14) de manière à transmettre le couple, **caractérisée en ce que**
la soupape à plusieurs voies (2) comporte un dispositif de contrôle (20) pour contrôler l'orientation correcte dans le sens circonférentiel du corps de soupape inférieur (14) par rapport au corps de soupape supérieur (16) et **en ce qu'**en fonction d'un défaut d'orientation relatif des deux corps de soupape (14, 16) dans le sens circonférentiel, une réaction à ce défaut d'orientation détecté peut être déclenchée automatiquement.

2. Soupape à plusieurs voies (2) selon la revendication 1,
**caractérisée en ce que**
le dispositif de contrôle (20) comporte une commande et un capteur relié à la commande à laquelle il transmet son signal pour déterminer automatiquement un angle de rotation réel lors de la rotation des deux corps de soupape (14, 16) d'une première position de fin de course à une deuxième position de fin de course, l'angle de rotation réel étant comparé dans la commande à un angle de rotation nominal prédéfini lors de la rotation des deux corps de soupape (14, 16) autour de l'axe de rotation (10) et l'angle de rotation réel correspondant, en cas d'orientation relative correcte dans le sens circonférentiel des deux corps de soupape (14, 16), à l'angle de rotation nominal.

3. Soupape à plusieurs voies (2) selon la revendication 1 ou 2,
**caractérisée en ce que**
le dispositif de contrôle (20) comprend un appariement inférieur coulisseau-coulisse (22, 24) disposé sur la paroi de séparation (12) et le corps de soupape inférieur (14) et un appariement supérieur coulisseau-coulisse (26, 28) disposé sur la paroi de séparation (12) et le corps de soupape supérieur (16).

4. Soupape à plusieurs voies (2) selon la revendication 3,
**caractérisée en ce que**
les coulisses (24, 28) des deux appariements coulisseau-coulisse (22, 24 ; 26, 28) sont décalées l'une par rapport à l'autre dans le sens circonférentiel de telle sorte que la première position de fin de course est fixée mécaniquement au moyen d'un appariement coulisseau-coulisse (22, 24) et la deuxième position de fin de course au moyen de l'autre appariement coulisseau-coulisse (26, 28).

5. Soupape à plusieurs voies (2) selon la revendication 4,
**caractérisée en ce que**
l'angle de rotation nominal est de 180°, chacune des coulisses (24, 28) des deux appariements coulisseau-coulisse (22, 24 ; 26, 28) permettant une plage d'angles de rotation supérieure à 180°.

6. Soupape à plusieurs voies (2) selon l'une des revendications 1 à 5,
**caractérisée en ce que**
**que** le boîtier (4) comporte une enveloppe de boîtier (30), une extrémité inférieure et une extrémité supérieure ouvertes de l'enveloppe de boîtier (30) pouvant être recouvertes pour l'essentiel de manière étanche au moyen d'un couvercle de boîtier inférieur et d'un couvercle de boîtier supérieur (32, 34), une ouverture d'arbre d'entraînement (36) pour le passage de l'arbre d'entraînement (18) étant prévue dans l'un des couvercles de boîtier (34).

7. Soupape à plusieurs voies (2) selon l'une des revendications 1 à 6,
**caractérisée en ce que**
l'arbre d'entraînement (18) est conçu comme une partie intégrante du corps de soupape inférieur ou supérieur (16).

8. Soupape à plusieurs voies (2) selon l'une des revendications 1 à 7,
**caractérisée en ce que**
le corps de soupape (16) relié à l'arbre d'entraînement (18) de manière à transmettre le couple est relié mécaniquement à l'autre corps de soupape (14) au moyen d'un accouplement (38) pour la transmission du couple, l'accouplement (38) présentant une partie d'accouplement inférieure (40) associée au corps de soupape inférieur (14) et une partie d'accouplement supérieure (42) associée au corps de soupape supérieur (16), et dans lequel la partie d'accouplement inférieure ou supérieure (42) fait saillie à travers une ouverture d'accouplement (44) dans la paroi de séparation (12), de préférence **en ce que** la partie d'accouplement inférieure (40) est constituée comme partie intégrante du corps de soupape inférieur (14) et/ou la partie d'accouplement supérieure (42) est constituée comme partie intégrante du corps de soupape supérieur (16).

9. Soupape à plusieurs voies (2) selon l'une des revendications 1 à 8,
**caractérisée en ce que**
un joint d'étanchéité distinct est monté respectivement entre le boîtier et le corps de soupape inférieur et/ou le corps de soupape supérieur et/ou entre l'enveloppe de boîtier et le couvercle de boîtier inférieur et/ou supérieur et/ou entre l'arbre d'entraînement et le couvercle de boîtier inférieur ou supérieur et/ou entre la paroi de séparation et la partie d'accouplement inférieure ou supérieure.

10. Procédé de fonctionnement d'une soupape à plusieurs voies (2) selon l'une des revendications 1 à 9, selon lequel une réaction est automatiquement déclenchée en cas de défaut d'alignement relatif des deux corps de soupape (14, 16) dans le sens circonférentiel.
